(19) Europäisches Patentamt / European Patent Office / Office européen des brevets

(11) **EP 4 120 046 B1**

(12) **EUROPEAN PATENT SPECIFICATION**

(45) Date of publication and mention
of the grant of the patent:
**03.07.2024 Bulletin 2024/27**

(21) Application number: **21184965.8**

(22) Date of filing: **12.07.2021**

(51) International Patent Classification (IPC):
**G05D 23/19** *(2006.01)* **F24F 110/10** *(2018.01)*
**F24F 110/20** *(2018.01)*

(52) Cooperative Patent Classification (CPC):
**G05D 23/1932;** F24F 11/70; F24F 2110/10;
F24F 2110/20

(54) **HEATING, VENTILATION, AND AIR-CONDITIONING SYSTEM AND METHOD OF CONTROLLING A HEATING, VENTILATION, AND AIR-CONDITIONING SYSTEM**

HEIZUNGS-, LÜFTUNGS- UND KLIMATISIERUNGSSYSTEM UND VERFAHREN ZUR STEUERUNG EINES HEIZUNGS-, LÜFTUNGS- UND KLIMATISIERUNGSSYSTEMS

SYSTÈME DE CHAUFFAGE, DE VENTILATION ET DE CLIMATISATION ET PROCÉDÉ DE COMMANDE D'UN SYSTÈME DE CHAUFFAGE, DE VENTILATION ET DE CLIMATISATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**18.01.2023 Bulletin 2023/03**

(73) Proprietor: **Robert Bosch GmbH**
**70442 Stuttgart (DE)**

(72) Inventors:
• **Cola, Fabrizio**
**534635 Singapur (SG)**
• **Gupta, Manish**
**328373 Singapure (SG)**
• **Tanyildiz, Baris**
**574036 Singapore (SG)**

(56) References cited:
**US-A1- 2006 206 291     US-A1- 2007 100 479**
**US-A1- 2009 199 580**

EP 4 120 046 B1

**Description**

**Technical field**

Various aspects of this disclosure relate to a heating, ventilation, and air-conditioning, HVAC system and a method of controlling a HVAC system.

**Background**

A heating, ventilation, and air-conditioning, HVAC, system may be employed to control an indoor environment (e.g., in a building, e.g., in a vehicle, etc.) to provide a thermal comfort and a desired indoor air quality. For this purpose, several HVAC devices, which are capable to change environmental parameters (e.g., a temperature, e.g., a humidity, etc.) may be distributed in the indoor environment. However, in order to control the environmental parameters of each region or zone of the indoor environment individually, it is necessary to determine which HVAC device(s) effects the environmental parameters within the respective region or zone. This correlation between HVAC devices and the regions or zones may be done manually, but this may require additional manpower and has the risk of human errors leading to wrong and/or incomplete correlations, which may lead to an erroneous control of the HVAC system. Hence, it may be advantageously to provide a method to more precisely correlate HVAC devices and regions or zones in an indoor environment and a HVAC system which is capable to carry out the method.

US 2006 / 0 206 291 A1 describes a method for commissioning sensors, the method including a determination of correlation data between the sensors and a plurality of actuators, wherein the correlation data are based upon conditions detected by the sensors at a plurality of actuator settings. US 2009 / 0 199 580 A1 describes a control method of an air conditioning system having a number of cooling supplies and at least one temperature sensor, the control method approximating an effect of each cooling supply on the temperature of a room which is then used for the operation of the cooling system. US 2007 / 0 100 479 A1 describes a system including a plurality of sensor microsystems configured to obtain environmental information regarding a plurality of areas in a building and a processing circuit, wherein the processing circuit is operable to obtain data representative of the environmental information regarding the plurality of areas in the building under a first set of operating parameter values, to change an operating parameter and obtain data representative of the environmental information regarding the plurality of areas under the changed set of operating parameter values, and to employ the data representative of the environmental information at a subsequent time.

**Summary**

Various embodiments relate to a method of controlling a heating, ventilation, and air-conditioning, HVAC, system, the method including: successively for at least two HVAC devices of a plurality of HVAC devices associated with the HVAC system: controlling the HVAC device in accordance with a set target HVAC temperature value which is different from an environmental temperature value, wherein the other HVAC devices of the plurality of HVAC devices are deactivated or running with unvarying running parameters, and for at least two environmental sensors of a plurality of environmental sensors (e.g., associated with the HVAC system and/or another system, such as a Smart Home System), determining whether one or more environmental parameters detected by the respective environmental sensor change, wherein determining whether one or more environmental parameters detected by the respective environmental sensor change includes the environmental sensor detecting a temperature gradient value while the HVAC device is controlled in accordance with the set target HVAC temperature; for each HVAC device of the at least two HVAC devices, determining a respective weight value for each environmental sensor correlated with the HVAC device using the temperature gradient values detected by the environmental sensors correlated with the HVAC device; for at least one environmental sensor of the at least two environmental sensors, correlating the at least one environmental sensor to the HVAC devices of the at least two HVAC devices for which a change of the one or more environmental parameters is determined; and controlling the HVAC system to change at least one environmental parameter associated with the at least one environmental sensor using the HVAC devices of the at least two HVAC devices correlated with the at least one environmental sensor and their respective weight value determined for the at least one environmental sensor.

According to various embodiments, running the other HVAC devices of the plurality of HVAC devices with unvarying running parameters may include maintaining respective running parameters of each of the plurality of HVAC devices constant except for the HVAC device which is controlled to change the environmental temperature.

According to various embodiments, the one or more environmental parameters may include one or more of a temperature, a humidity, and/or a dew point.

According to various embodiments, the HVAC system may include a variable refrigerant flow system and/or a chiller system.

According to various embodiments, the weight value associated with an environmental sensor correlated with the HVAC device is determined as a fraction of the temperature gradient value detected by the environmental sensor from all temperature gradient values that are detected by the environmental sensors correlated with the HVAC device.

According to various embodiments, two or more HVAC devices may be correlated with the at least one environmental sensor.

According to various embodiments, controlling the HVAC system to change at least one environmental parameter associated with the at least one environmental sensor of the at least two environmental sensors using the HVAC devices of the at least two HVAC devices correlated with the at least one environmental sensor may include: controlling the HVAC system to change at least one environmental parameter associated with the at least one environmental sensor of the at least two environmental sensors using the HVAC devices correlated with the at least one environmental sensor and occupancy information, the occupancy information describing an occupancy of a region in which the HVAC devices correlated with the at least one environmental sensor are located.

Various embodiments relate to a heating, ventilation, and air-conditioning, HVAC, system, the HVAC system including: a plurality of HVAC devices, wherein each of the plurality of HVAC devices is configured to change an environmental temperature in accordance with a respective set target HVAC temperature; a plurality of environmental sensors, wherein each of the plurality of environmental sensors is configured to detect one or more environmental parameters; and a control device configured to control the plurality of HVAC devices and the plurality of environmental sensors and to carry out the method of controlling a HVAC system according to one or more of the above described embodiments. According to various embodiments, at least one (e.g., each) environmental sensor of the plurality of environmental sensors is configured to wirelessly transmit the detected one or more environmental parameters to the control device.

## Brief description of the drawings

The invention will be better understood with reference to the detailed description when considered in conjunction with the non-limiting examples and the accompanying drawings, in which:

- FIG. 1 shows exemplary HVAC system according to various embodiments;
- FIG. 2, FIG. 3A, FIG. 3B, and FIG. 4 each show a flow diagram of a method of controlling a HVAC system according to various embodiments;
- FIG. 5B shows an exemplary mapping of HVAC devices to environmental sensors according to various embodiments; and

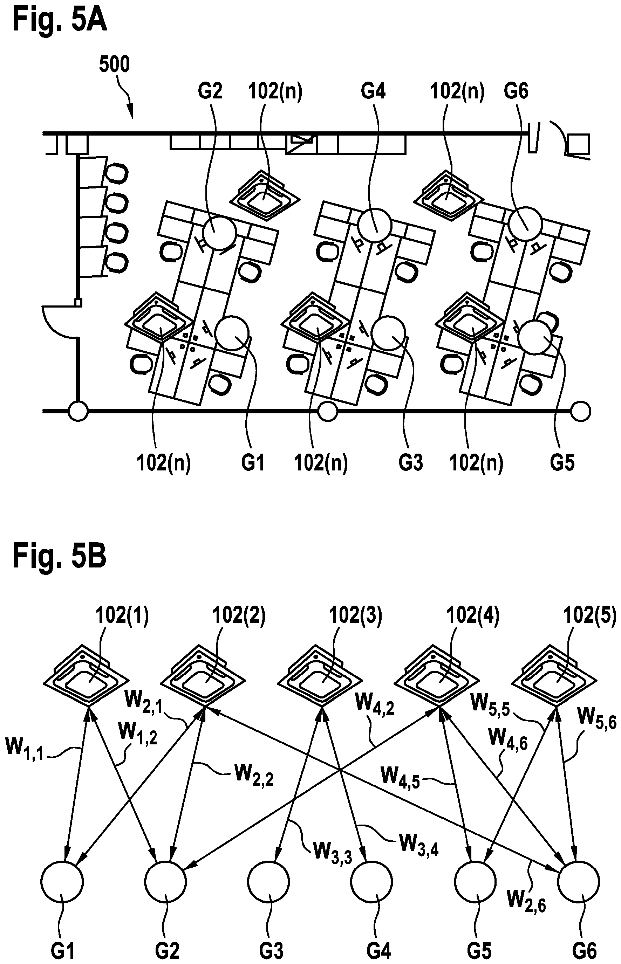

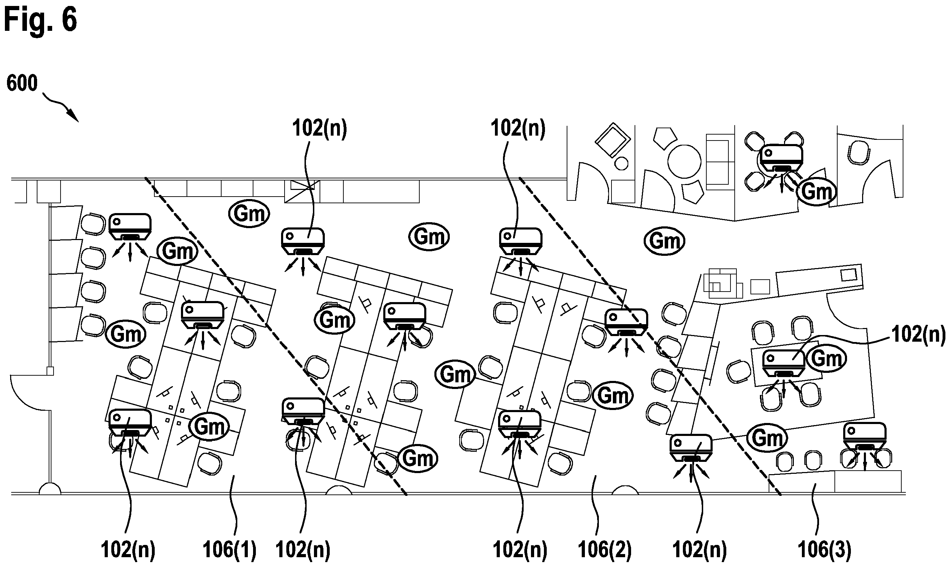

- FIG. 5A und FIG. 6 each show an exemplary HVAC system.

## Detailed description

The following detailed description refers to the accompanying drawings that show, by way of illustration, specific details and embodiments in which the disclosure may be practiced. These embodiments are described in sufficient detail to enable those skilled in the art to practice the disclosure. The various embodiments are not necessarily mutually exclusive, as some embodiments can be combined with one or more other embodiments to form new embodiments.

Embodiments described in the context of one of the HVAC systems or methods are analogously valid for the other enclosure HVAC systems or methods. Similarly, embodiments described in the context of a HVAC system are analogously valid for a method, and vice-versa.

Features that are described in the context of an embodiment may correspondingly be applicable to the same or similar features in the other embodiments. Features that are described in the context of an embodiment may correspondingly be applicable to the other embodiments, even if not explicitly described in these other embodiments. Furthermore, additions and/or combinations and/or alternatives as described for a feature in the context of an embodiment may correspondingly be applicable to the same or similar feature in the other embodiments.

In the context of various embodiments, the articles "a", "an" and "the" as used with regard to a feature or element include a reference to one or more of the features or elements.

As used herein, the term "and/or" includes any and all combinations of one or more of the associated listed items.

The scope of the invention is thus indicated by the appended claims and all changes which come within the meaning and range of equivalency of the claims are therefore intended to be embraced.

To control a heating, ventilation, and air-conditioning, HVAC, system efficiently, it is necessary to know which HVAC device influences which region of an indoor environment (e.g., in a building, e.g., in a vehicle, etc.). Various aspects relate to a HVAC system and a method of controlling a HVAC system which are capable to map HVAC devices to regions in an indoor environment by correlating the HVAC devices with environmental sensors within the indoor environment.

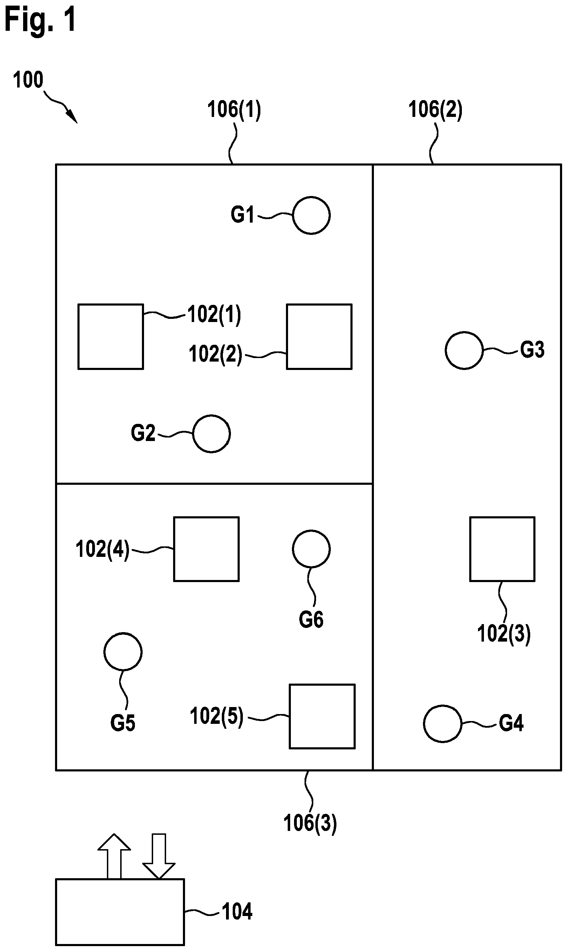

**FIG. 1** shows an exemplary HVAC system 100 according to various embodiments.

The HVAC system 100 may include a plurality of HVAC devices 102(n=1 to N). N may be any integer number equal to or greater than two. A HVAC device as used herein may be any kind of device capable to change environmental conditions in a surrounding of the device. For example, the HVAC system 100 may be or may include a Variable Refrigerant Flow (VRF) system (see, for example, FIG. 5A). In this case, a HVAC device may be an indoor VRF unit of the VRF system. For example, the HVAC system may be or may include a chiller system (see, for example, FIG. 6). In this case, a HVAC device may be a chiller unit of the chiller system. According to various aspects, the HVAC system may be or may include a VRF system and a chiller system. In this case, the HVAC system may include VRF units and chiller units as HVAC devices.

Each HVAC device 102(n) of the plurality of HVAC devices 102(n=1 to N) may be configured to change one or more environmental parameters in accordance with set target parameters. According to various aspects, each HVAC device 102(n) of the plurality of HVAC devices 102(n=1 to N) may be configured to change an environmental temperature (in some aspects also referred to as environment temperature) in accordance with a respective set target HVAC temperature (e.g., 22 C or any other temperature which is different from a current environmental temperature (e.g., room temperature)). Illustratively, each HVAC device 102(n) may be set to a target HVAC temperature and may be configured to change the environmental temperature in the surrounding of the HVAC device to reach the set target HVAC temperature.

The HVAC system 100 may include and/or may communicate with a plurality of environmental sensors Gm (with m=1 to M). M may be any integer number equal to or greater than two. Each environmental sensor Gm of the plurality of environmental sensors may be configured to detect one or more environmental parameters. Each environmental sensor Gm of the plurality of environmental sensors may be configured to detect the one or more environmental parameters in a surrounding of the respective environmental sensor. An environmental parameter of the one or more environmental parameters may be, for example, a temperature, a humidity, or a dew point. For example, the HVAC system 100 may include each environmental sensor of the plurality of environmental sensors Gm. For example, a Smart Home System may include each environmental sensor of the plurality of environmental sensors Gm. For example, the Smart Home System may include some environmental sensors of the plurality of environmental sensors Gm and the HVAC system 100 may include some (e.g., the other) environmental sensors of the plurality of environmental sensors Gm. The Smart Home System may be communicatively coupled to the HVAC system 100 (e.g., to transmit the one or more environmental parameters detected by an environmental sensor to the HVAC system 100). For example, one or more environmental sensors of the plurality of environmental sensors Gm may be part of other electrical products, such as a TV, a receiver, a washing machine, an oven, or the like.

The HVAC system 100 may include a control device 104 (e.g., including one or more processors). The control device 104 may be configured to control the plurality of HVAC devices 102(n). For example, the control device 104 may be configured to set the respective target HVAC temperature of each HVAC device. The control device 104 may be configured to control the HVAC system 100 (e.g., employing the plurality of HVAC devices 102(n)) to change environmental parameters within the indoor environment. The control device 104 may be configured to communicate with each environmental sensor Gm of the plurality of environmental sensors. For example, each environmental sensor Gm may be configured to provide (e.g., transmit) the detected one or more environmental parameters to the control device 104. For example, the control device 104 and the HVAC devices may be part of the same system (e.g., integrated) and the control device 104 may receive the data representing the detected one or more environmental parameters from each environmental sensor. For example, the HVAC devices may be part of a building management system and the control device 104 may be configured to communicate (e.g., via an open source protocol, such as BacNet/Modbus) with the building management system to receive the data representing the detected one or more environmental parameters of each environmental sensor. The data acquired by the control device 104 may be stored in a local memory and/or in a cloud memory.

According to various aspects, an environmental sensor Gm of the plurality of environmental sensors may be a wireless sensor. Illustratively, an environmental sensor Gm of the plurality of environmental sensors may be configured to wirelessly transmit (e.g., via Bluetooth, e.g., via Wireless Fidelity, etc.) the detected one or more environmental parameters (e.g., data representing the detected one or more environmental parameters). Each environmental sensor Gm of the plurality of environmental sensors may be configured to wirelessly transmit the detected one or more environmental parameters to the control device 104. At least one environmental sensor (e.g., each environmental sensor) of the plurality of environmental sensors may be as associated with an internet-of things (IOT) Gateway. For example, the HVAC system 100 may include a plurality of IOT Gateways. At least one (e.g., each) IOT Gateway may be configured to receive respective sensor data from one or more sensors associated with the IOT Gateway and may be configured to transmit the received sensor data to the control device 104. At least one (e.g., each) IOT Gateway may be configured to receive respectively detected environmental parameters from one or more environmental sensors of the plurality of environmental sensors. According to various aspects, the plurality of IOT Gateways may communicate with each other via a mesh network. Illustratively, the plurality of IOT Gateways may form (e.g., create) a mesh network. According to various aspects, one or more (e.g., all) of the IOT Gateways may be configured to receive an occupancy sensor configured to detect occupancy information which describe an occupancy of a region (e.g., a zone). According to various aspects, the HVAC system 100 may include a first group of IOT Gateways associated with the environmental sensors and a second group of IOT Gateways associated with the occupancy sensors.

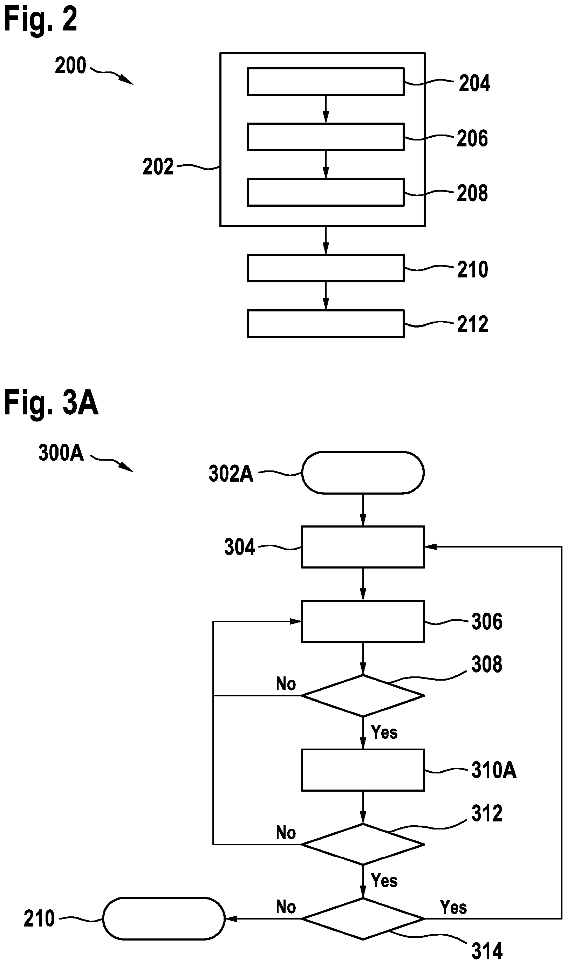

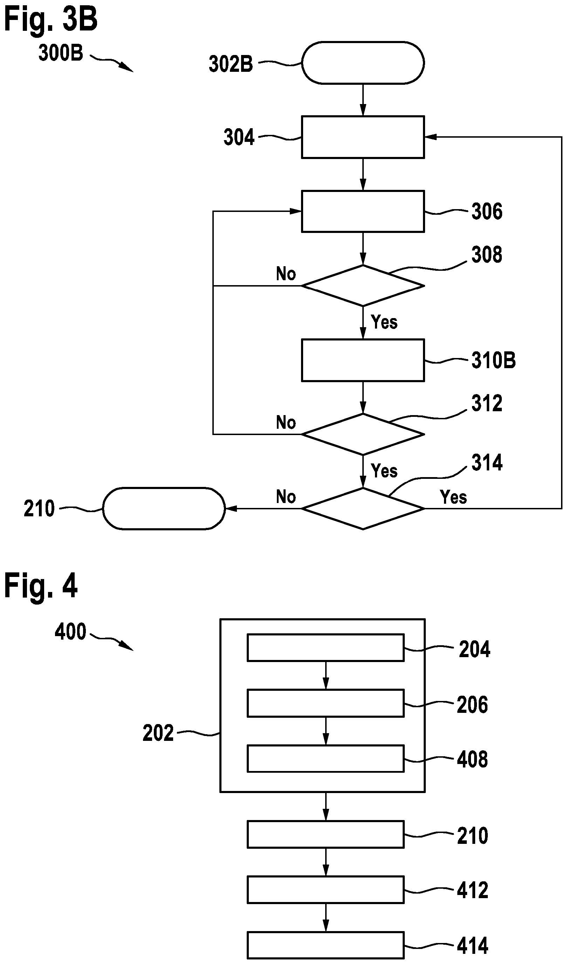

The HVAC system 100 may be associated with an indoor environment. The indoor environment may include a plurality of zones (e.g., regions within the indoor environment). For example, a zone of the plurality of zones associated with the HVAC system 100 may be a room within the indoor environment. As illustrative examples, FIG. 1 shows a first zone 106(1), a second zone 106(2), and a third zone 106(3). For example, a floor plan of the indoor environment (e.g., a building) may include the plurality of zones, the respective position of each HVAC device 102(n) of the plurality of HVAC devices, and the respective position of each environmental sensor Gm of the plurality of environmental sensors. However, the indoor environment may include several zones within the same room and in order to control the environmental conditions within the indoor environment it is necessary to determine which HVAC device 102(n) effects which zone(s) or even which sub-regions of a zone. Various methods of controlling a HVAC system, such as the HVAC system 100, capable to correlate with the plurality of HVAC devices and the plurality of environmental sensors are described with reference to FIG. 2, FIG. 3A, and FIG. 3B. The environmental conditions within a zone may be changed by more than one HVAC device 102(n) of the plurality of HVAC devices. However, the HVAC devices which influence the environmental conditions of the same zone may have a different impact on the environmental conditions within the zone. Various methods of controlling a HVAC system, such as the HVAC system 100, capable to determine a respective impact of each HVAC device of the plurality of HVAC devices on each environmental sensor of the plurality of environmental sensors are described with reference to FIG. 4 and FIG. 5B.

**FIG. 2** shows a flow diagram of a method 200 of controlling a HVAC system, such as the HVAC system 100. The method 200 may (in 202) include successively for each of at least two HVAC devices (e.g., two HVAC devices, e.g., three HVAC devices, e.g., more than three HVAC devices) of a plurality of HVAC devices (e.g., two HVAC devices, e.g., three HVAC devices, e.g., more than three HVAC devices) associated with the HVAC system: controlling the HVAC device in accordance with a set target HVAC temperature value which is different from an environmental temperature (in 204). A number of HVAC devices of the plurality of HVAC devices may be equal to or greater than a number of HVAC devices of the at least two HVAC devices. In the case that the number of HVAC devices of the plurality of HVAC devices is equal to the number of HVAC devices of the at least two HVAC devices, the method 200 may (in 202) be carried out successively for each HVAC device of the plurality of HVAC devices. The other HVAC devices of the plurality of HVAC devices may be deactivated (e.g., switched off) or may run with unvarying running parameters. For example, current running parameters of the other HVAC devices may be maintained constant. The other HVAC devices of the plurality of HVAC devices may be deactivated or set to run with unvarying running parameters prior to controlling the HVAC device in accordance with the set target HVAC temperature value or afterwards (e.g., in 206). Running parameters of a HVAC device, as used herein, may be any kind of parameters associated with changing environmental conditions, such as a fan speed, a valve opening (e.g., of a valve for controlling a flow of a cooling liquid, such as a throughput of cooling water), etc. The method 200 may include, for at least two environmental sensors (e.g., for each environmental sensor) of a plurality of environmental sensors, determining whether one or more environmental parameters detected by the environmental sensor change (in 208). According to various aspects, the HVAC system 100 may be configured to carry out the method. In this case, the control device 104 may be configured to control each HVAC device, such as setting the target HVAC temperature, deactivating the HVAC device, or set the HVAC device to unvarying running parameters. Each environmental parameter Gm of the HVAC system 100 may be configured to transmit the detected one or more environmental parameters to the control device 104 and the control device 104 may be configured to determine for each environmental sensor whether the detected one or more environmental parameters change.

The method 200 may include, for at least one (e.g., each) environmental sensor of the at least two environmental sensors (e.g., each of the plurality of environmental sensors), correlating the environmental sensor to the HVAC devices of the at least two HVAC devices (e.g., to the HVAC devices of the plurality of HVAC devices) for which a change of the one or more environmental parameters is determined (in 210). Illustratively, correlating the environmental sensor to the HVAC devices for which a change of the one or more environmental parameters is determined provides a mapping of environmental sensors to HVAC devices which impact a respective environmental sensor as well as a mapping of each HVAC device to the environmental sensors which are effected by the respective HVAC device. According to various aspects, the HVAC system 100 may be configured to carry out the method and an illustrative example of a correlation between each environmental sensor Gm and the plurality of HVAC devices is exemplarily shown in the following table 1, wherein "0" denotes no impact and "1" denotes that environmental conditions in the surrounding of the respective environmental sensor are changed by the respective HVAC device; table 1:

|        | G1 | G2 | G3 | G4 | G5 | G6 |
|--------|----|----|----|----|----|----|
| 102(1) | 1  | 1  | 0  | 0  | 0  | 0  |
| 102(2) | 1  | 1  | 0  | 0  | 0  | 1  |

(continued)

|  | G1 | G2 | G3 | G4 | G5 | G6 |
|---|---|---|---|---|---|---|
| 102(3) | 0 | 0 | 1 | 1 | 0 | 0 |
| 102(4) | 0 | 1 | 0 | 0 | 1 | 1 |
| 102(5) | 0 | 0 | 0 | 0 | 1 | 1 |

The method may include controlling the HVAC system to change at least one environmental parameter associated with at least one environmental sensor of the plurality of environmental sensors using the HVAC devices (e.g., the HVAC devices of the at least two HVAC devices or the HVAC devices of the plurality of HVAC devices correlated with the at least one environmental sensor (in 212). According to various aspects, the HVAC system 100 may be configured to carry out the method and control device 104 may be configured to control at least one environmental parameter (e.g., a temperature) of the environmental sensor G6 using the HVAC devices 102(2), 102(4), and 102(5) correlated with the environmental sensor G6. As another example, the control device 104 may control at least one environmental parameter of the environmental sensor G1 and of the environmental sensor G2 using the HVAC devices 102(1), 102(2), and 102(4) correlated with the environmental sensors G1 and/or G2.

As described herein with reference to FIG. 2, the other HVAC devices except for the HVAC device which is controlled to change the environmental temperature may be either deactivated (e.g., switched off) or may run with unvarying running parameters. FIG. 3A shows a flow diagram 300A of a method of controlling a HVAC system according to various embodiments, wherein the other HVAC devices are switched off. FIG. 3B shows a flow diagram 300B of a method of controlling a HVAC system according to various embodiments, wherein the other HVAC devices are running with unvarying running parameters. According to various aspects, the methods described with reference to FIG. 3A and FIG. 3B may be carried out as part of the method described with reference to FIG. 2 (e.g., in or as part of 202).

With reference to FIG. 3A, the method may include creating a schedule to turn on one HVAC device and turn off the other HVAC devices sequentially (in 302A). The method may include controlling one of the HVAC devices in accordance with a set target HVAC temperature value which is different from an environmental temperature (in 304). The method may include each environmental sensor of the plurality of environmental sensors detecting respective one or more environmental parameters (in 306). The method may include determining whether a scheduled time (e.g., 15 min, e.g., 30 min, e.g., a time in the range from about 15 min to about 30 min, etc.) is complete or not (in 308). In the case, that the scheduled time is not complete ("No" in 308), the method may include that the plurality of environmental sensors continues detecting respective one or more environmental parameters. In the case, that the scheduled time is complete ("Yes" in 308), the method may include switching off the currently controlled HVAC device (in 310A). The method may also include a predefined time interval (e.g., a time in the range from about 15 min to about 30 min) to wait for the HVAC devices to cool down and/or an interval waiting for the HVAC devices to reach a predefined temperature. The method may include determining whether the predefined time interval is over and/or whether the predefined temperature is achieved (in 312). In the case, that the predefined time interval is not over and/or the predefined temperature is not achieved ("No" in 312), the method may include that the plurality of environmental sensors continues detecting respective one or more environmental parameters. In the case, that the predefined time interval is over and/or the predefined temperature is achieved ("Yes" in 312), the method may include determining whether another HVAC device of the plurality of HVAC devices is scheduled to be controlled in accordance with a set target HVAC temperature value (in 314). In the case that another HVAC device of the plurality of HVAC devices is scheduled to be controlled in accordance with a set target HVAC temperature value ("Yes" in 314), the method may include controlling the other HVAC device in accordance with the set target HVAC temperature value (in 304). In the case that no other HVAC device of the plurality of HVAC devices is scheduled to be controlled in accordance with a set target HVAC temperature value ("No" in 314), the method may include, for each environmental sensor of the plurality of environmental sensors, correlating the environmental sensor to the HVAC devices of the plurality of HVAC devices for which a change of the one or more environmental parameters is determined (in 210). The method shown in FIG. 3B may be similar to the method of FIG. 3A and may differentiate in that the method may include creating a schedule to sequentially change a set target HVAC temperature value of one HVAC device and to run the other HVAC devices with unvarying running parameters (in 302B). In the case, that the scheduled time is complete ("Yes" in 308), the method shown in FIG. 3B may include changing the running parameters of the currently controlled HVAC device to predefined (e.g., standard) running parameters (in 310B).

Similar to the correlation of an environmental sensor to the HVAC devices of the plurality of HVAC devices for which a change of the one or more environmental parameters is determined (as described with reference to FIG. 2), the IOT Gateway, which receives the one or more environmental parameters from the environmental sensor and transmits the received one or more environmental parameters to the control device 104, may be correlated with the HVAC devices.

**FIG. 4** shows a flow diagram 400 of a method for mapping HVAC devices to environmental sensors according to various embodiments. The method is capable to determine a respective impact of each HVAC device of the plurality of HVAC devices on each environmental sensor of the plurality of environmental sensors. The method shown in flow diagram may similar to the method 200, wherein (in 208 of method 200), each environmental sensor of the plurality of environmental sensors may further detect a temperature gradient value (e.g., a change of a temperature over time, such as a temperature change per minute) while the HVAC device is controlled in accordance with the set target HVAC temperature (in 408). Alternatively, each environmental sensor of the plurality of environmental sensors may continuously detect temperature values and a control device (e.g., the control device 104 in the case of the HVAC system 100) may determine the temperature gradient value using the continuously detected temperature values. After correlating each environmental sensor to the HVAC devices for which a change of the one or more environmental parameters is detected (in 210), the method may include, for each HVAC device of the plurality of HVAC devices, determining a respective weight value for each environmental sensor correlated with the HVAC device (in 412). The may include, for each HVAC device of the plurality of HVAC devices, determining a respective weight value for each environmental sensor correlated with the HVAC device using the temperature gradient values detected by the environmental sensors correlated with the HVAC device. The weight value associated with an environmental sensor correlated with the HVAC device may be determined as a fraction of the temperature gradient value detected by the environmental sensor from (e.g., out of) all temperature gradient values that are detected by the environmental sensors correlated with the HVAC device. For example, in the case of the HVAC system 100, a weight value $W(n, m)$ associated with a HVAC device 102(n) and an environmental sensor Gm may be determined as a fraction of the temperature gradient value detected by the environmental sensor Gm from all temperature gradient values that are detected by the environmental sensors G(m=1 to M), such as shown in the following equation, wherein Un denotes the HVAC device 102(n):

$$W(n,m) = \frac{Tgrad(Gm,Un)}{\sum_{m=0}^{m=M} Tgrad(Gm,Un)}$$ . For example, a weight value W(2, 1) associated with the HVAC device 102(1) and an environmental sensor G2 may be determined by $$W(2,1) = \frac{Tgrad(G1,U2)}{\sum_{m=0}^{m=M} Tgrad(Gm,U2)}$$ . Illustratively, the sum of all weight values associated with an environmental sensor may be equal to "1".

The method may include controlling the HVAC system to change at least one environmental parameter associated with at least one environmental sensor of the plurality of environmental sensors using the HVAC devices correlated with the at least one environmental sensor and their respective weight values determined for the at least one environmental sensor. This may improve the control of the overall HVAC system since environmental parameters in the indoor environment can be adjusted more precisely. According to various aspects, the HVAC system 100 may be configured to carry out the method. In an example based on table 1, the control device 104 may be configured to control at least one environmental parameter (e.g., a temperature) of the environmental sensor G6 using the HVAC devices 102(2), 102(4), and 102(5) correlated with the environmental sensor G6 and their respective weight values W(2, 6), W(4, 6), and W(5, 6) determined for the at least one environmental sensor G6.

As described herein, the HVAC system (e.g., the HVAC system 100) may be or may include a VRF system and/or a chiller system. **FIG. 5A** shows an exemplary HVAC system 500 including VRF units as HVAC devices 102(n) and a plurality of environmental sensors Gm. **FIG. 6** shows an exemplary HVAC system 600 including chiller units as HVAC devices 102(n) and a plurality of environmental sensors Gm.

**FIG. 5B** shows an exemplary mapping of HVAC devices to environmental sensors which may be achieved as a result of determining a respective weight value for each environmental sensor correlated with a respective HVAC device (in 412) of the method of FIG. 4. This example of a mapping of HVAC devices to environmental sensors may be based on table 1 and may result in table 2:

|        | G1     | G2     | G3     | G4     | G5     | G6     |
|--------|--------|--------|--------|--------|--------|--------|
| 102(1) | W(1,1) | W(1,2) | 0      | 0      | 0      | 0      |
| 102(2) | W(2,1) | W(2,2) | 0      | 0      | 0      | W(2,6) |
| 102(3) | 0      | 0      | W(3,3) | W(3,4) | 0      | 0      |
| 102(4) | 0      | W(4,2) | 0      | 0      | W(4,5) | W(4,6) |
| 102(5) | 0      | 0      | 0      | 0      | W(5,5) | W(5,6) |

The controlling of the HVAC system to change at least one environmental parameter associated with at least one environmental sensor of the plurality of environmental sensors may be carried out using one or more additional information. The additional information may include occupancy information which describe an occupancy of a region (e.g., a zone) in which the HVAC devices correlated with the at least one environmental sensors are located. A number of people occupying a zone may impact, for example, a cooling/heating rate associated with an environmental temperature. The occupancy information may be detected by a plurality of occupancy sensors (e.g., infrared-based, e.g., ultrasonic-based, e.g., microwave-based, etc.). According to various aspects, the HVAC system may include a plurality of IOT Gateways and each IOT Gateway may be associated with an environmental sensor of the plurality of environmental sensors and an occupancy sensor of the plurality of occupancy sensors. The additional information may include a thermal comfort of the people occupying the indoor environment (e.g., using a user-in-the-loop approach, wherein a temperature is controlled in accordance with a personal thermal comfort).

**Claims**

1. A method (200) of controlling a heating, ventilation, and air-conditioning, HVAC, system, the method (200) comprising:

   successively for at least two HVAC devices of a plurality of HVAC devices associated with the HVAC system (202):

   • controlling the HVAC device in accordance with a set target HVAC temperature value which is different from an environmental temperature value (204),
   • wherein the other HVAC devices of the plurality of HVAC devices are deactivated or running with unvarying running parameters (206), and
   • for at least two environmental sensors of a plurality of environmental sensors, determining whether one or more environmental parameters detected by the respective environmental sensor change (208), wherein determining whether one or more environmental parameters detected by the respective environmental sensor change (208) comprises the environmental sensor detecting a temperature gradient value while the HVAC device is controlled in accordance with the set target HVAC temperature (408);
   • for each HVAC device of the at least two HVAC devices, determining a respective weight value for each environmental sensor correlated with the HVAC device using the temperature gradient values detected by the environmental sensors correlated with the HVAC device (412);

   for at least one environmental sensor of the at least two environmental sensors,
   correlating the at least one environmental sensor to the HVAC devices of the at least two HVAC devices for which a change of the one or more environmental parameters is determined (210); and
   controlling the HVAC system to change at least one environmental parameter associated with the at least one environmental sensor using the HVAC devices of the at least two HVAC devices correlated with the at least one environmental sensor (212) and their respective weight value determined for the at least one environmental sensor (414).

2. The method (200) according to claim 1,
   wherein running the other HVAC devices of the plurality of HVAC devices with unvarying running parameters (206) comprises maintaining respective running parameters of each of the plurality of HVAC devices constant except for the HVAC device which is controlled to change the environmental temperature.

3. The method (200) according to claim 1 or 2,
   wherein the one or more environmental parameters comprise one or more of a temperature, a humidity, and/or a dew point.

4. The method (200) according to any one of claims 1 to 3,
   wherein the HVAC system comprises a variable refrigerant flow system and/or a chiller system.

5. The method (200, 400) according to any one of claims 1 to 4,
   wherein the weight value associated with an environmental sensor correlated with the HVAC device is determined as a fraction of the temperature gradient value detected by the environmental sensor from all temperature gradient values that are detected by the environmental sensors correlated with the HVAC device.

6. A heating, ventilation, and air-conditioning, HVAC, system (100) comprising:

   • a plurality of HVAC devices (102(1), 102(2), 102(3), 102(4), 102(5)), wherein each of the plurality of HVAC devices (102(1) ,102(2), 102(3), 102(4), 102(5)) is configured to change an environmental temperature in accordance with a respective set target HVAC temperature;
• a plurality of environmental sensors (G1, G2, G3, G4, G5, G6)), wherein each of the plurality of environmental sensors (G1, G2, G3, G4, G5, G6)) is configured to detect one or more environmental parameters; and

a control device (104) configured to control the plurality of HVAC devices (102(1) ,102(2), 102(3), 102(4), 102(5)) and the plurality of environmental sensors (G1, G2, G3, G4, G5, G6)) and to carry out the method of any of claims 1 to 5.

7. The HVAC system (100) according to claim 6,
wherein at least one environmental sensor of the plurality of environmental sensors is configured to wirelessly transmit the detected one or more environmental parameters to the control device.

**Patentansprüche**

1. Verfahren (200) zur Steuerung eines Heizungs-, Lüftungs- und Klimatisierungssystems (HLK-System), wobei das Verfahren (200) Folgendes umfasst:

nacheinander für mindestens zwei HLK-Geräte aus einer Mehrzahl von HLK-Geräten, die dem HLK-System (202) zugeordnet sind:

• Steuern des HLK-Gerätes in Übereinstimmung mit einem eingestellten HLK-Solltemperaturwert, der sich von einem Umgebungstemperaturwert (204) unterscheidet,
• wobei die anderen HLK-Geräte der Mehrzahl von HLK-Geräten deaktiviert sind oder mit unveränderten Betriebsparametern laufen (206), und
• für mindestens zwei Umweltsensoren einer Mehrzahl von Umweltsensoren, Bestimmen, ob sich ein oder mehrere von dem jeweiligen Umweltsensor erfasste Umweltparameter ändern (208), wobei das Bestimmen, ob sich ein oder mehrere von dem jeweiligen Umweltsensor erfasste Umweltparameter ändern (208), das Erfassen eines Temperaturgradientenwertes durch den Umweltsensor umfasst, während das HLK-Gerät gemäß der eingestellten HLK-Solltemperatur (408) gesteuert wird;
• für jedes HLK-Gerät der mindestens zwei HLK-Geräte, Bestimmen eines jeweiligen Gewichtungswertes für jeden mit dem HLK-Gerät korrelierten Umgebungssensor unter Verwendung der Temperaturgradientenwerte, die von den mit dem HLK-Gerät korrelierten Umgebungssensoren erkannt werden (412);

für mindestens einen Umweltsensor der mindestens zwei Umweltsensoren, Korrelieren des mindestens einen Umweltsensors mit den HLK-Geräten der mindestens zwei HLK-Geräte, für die eine Änderung des einen oder mehrerer Umweltparameter bestimmt wird (210); und
Steuern des HLK-Systems, um mindestens einen Umgebungsparameter zu ändern, der mit dem mindestens einen Umgebungssensor verbunden ist, unter Verwendung der HLK-Geräte der mindestens zwei HLK-Geräte, die mit dem mindestens einen Umgebungssensor (212) korreliert sind, und ihres jeweiligen für den mindestens einen Umgebungssensor (414) bestimmten Gewichtungswertes.

2. Verfahren (200) nach Anspruch 1,
wobei das Betreiben der anderen HLK-Geräte der Mehrzahl von HLK-Geräten mit unveränderlichen Betriebsparametern (206) das Konstanthalten der jeweiligen Betriebsparameter jedes der Mehrzahl von HLK-Geräten umfasst, mit Ausnahme des HLK-Gerätes, das so gesteuert wird, dass es die Umgebungstemperatur ändert.

3. Verfahren (200) nach Anspruch 1 oder 2,
wobei der eine oder die mehreren Umgebungsparameter eine oder mehrere Temperaturen, eine Luftfeuchtigkeit und/oder einen Taupunkt umfassen.

4. Verfahren (200) nach einem der Ansprüche 1 bis 3, wobei das HLK-System ein System mit variablem Kältemittelfluss und/oder ein Kühlsystem umfasst.

5. Verfahren (200, 400) nach einem der Ansprüche 1 bis 4,
wobei der Gewichtungswert, der einem mit dem HLK-Gerät korrelierten Umgebungssensor zugeordnet ist, als ein Bruchteil des von dem Umgebungssensor erkannten Temperaturgradientenwertes aus allen Temperaturgradientenwerten bestimmt wird, die von den mit dem HLK-Gerät korrelierten Umgebungssensoren erkannt werden.

6. Heizungs-, Lüftungs- und Klimatisierungssystem (HLK-System) (100), das Folgendes umfasst:

   • eine Mehrzahl von HLK-Geräten (102(1), 102(2), 102(3), 102(4), 102(5)), wobei jedes der Mehrzahl von HLK-Geräten (102(1), 102(2), 102(3), 102(4), 102(5)) ausgebildet ist, um eine Umgebungstemperatur in Übereinstimmung mit einer jeweiligen eingestellten HLK-Solltemperatur zu ändern;
   • eine Mehrzahl von Umgebungssensoren (G1, G2, G3, G4, G5, G6), wobei jeder der Mehrzahl von Umgebungssensoren (G1, G2, G3, G4, G5, G6) ausgebildet ist, um einen oder mehrere Umgebungsparameter zu erkennen; und

   ein Steuergerät (104), das ausgebildet ist, um die Mehrzahl von HLK-Geräten (102(1), 102(2), 102(3), 102(4), 102(5)) und die Mehrzahl von Umgebungssensoren (G1, G2, G3, G4, G5, G6) zu steuern und das Verfahren nach einem der Ansprüche 1 bis 5 auszuführen.

7. HLK-System (100) nach Anspruch 6,
   wobei mindestens ein Umgebungssensor der Mehrzahl von Umgebungssensoren ausgebildet ist, um den erkannten einen oder mehrere Umgebungsparameter drahtlos an das Steuergerät zu übertragen.

## Revendications

1. Procédé (200) de commande d'un système de chauffage, ventilation et climatisation, HVAC, le procédé (200) comprenant :

   successivement pour au moins deux dispositifs HVAC d'une pluralité de dispositifs HVAC associés au système HVAC (202) :

   • la commande du dispositif HVAC selon une valeur de température HVAC cible définie différente d'une valeur de température environnementale (204),
   • les autres dispositifs HVAC de la pluralité de dispositifs HVAC étant désactivés ou fonctionnant avec des paramètres de fonctionnement invariables (206), et
   • pour au moins deux capteurs environnementaux d'une pluralité de capteurs environnementaux, la détermination si un ou plusieurs paramètres environnementaux détectés par le capteur environnemental respectif changent ou non (208), la détermination si un ou plusieurs paramètres environnementaux détectés par le capteur environnemental respectif changent ou non (208) comprenant la détection, par le capteur environnemental, d'une valeur de gradient de température tandis que le dispositif HVAC est commandé selon la température HVAC cible définie (408) ;
   • pour chaque dispositif HVAC des au moins deux dispositifs HVAC, la détermination d'une valeur de poids respective pour chaque capteur environnemental corrélé au dispositif HVAC en utilisant les valeurs de gradient de température détectées par les capteurs environnementaux corrélés au dispositif HVAC (412) ;

   pour au moins un capteur environnemental des au moins deux capteurs environnementaux, la corrélation de l'au moins un capteur environnemental aux dispositifs HVAC des au moins deux dispositifs HVAC pour lesquels un changement des un ou plusieurs paramètres environnementaux est déterminé (210) ; et
   la commande du système HVAC pour changer au moins un paramètre environnemental associé à l'au moins un capteur environnemental en utilisant les dispositifs HVAC des au moins deux dispositifs HVAC corrélés à l'au moins un capteur environnemental (212) et leur valeur de poids respective déterminée pour l'au moins un capteur environnemental (414).

2. Procédé (200) selon la revendication 1,
   le fonctionnement des autres dispositifs HVAC de la pluralité de dispositifs HVAC avec des paramètres de fonctionnement invariables (206) comprenant le maintien de paramètres de fonctionnement respectifs de chacun de la pluralité de dispositifs HVAC constants sauf pour le dispositif HVAC qui est commandé pour changer la température environnementale.

3. Procédé (200) selon la revendication 1 ou 2,
   les un ou plusieurs paramètres environnementaux comprenant une température et/ou une humidité et/ou un point de condensation.

**4.** Procédé (200) selon l'une quelconque des revendications 1 à 3,
le système HVAC comprenant un système à flux réfrigérant variable et/ou un système refroidisseur.

**5.** Procédé (200, 400) selon l'une quelconque des revendications 1 à 4,
la valeur de poids associée à un capteur environnemental corrélé au dispositif HVAC étant déterminée comme une fraction de la valeur de gradient de température détectée par le capteur environnemental à partir de toutes les valeurs de gradient de température qui sont détectées par les capteurs environnementaux corrélés au dispositif HVAC.

**6.** Système de chauffage, ventilation et climatisation, HVAC (100) comprenant :

• une pluralité de dispositifs HVAC (102(1), 102(2), 102(3), 102(4), 102(5)), chacun de la pluralité de dispositifs HVAC (102(1), 102(2), 102(3), 102(4), 102(5)) étant configuré pour changer une température environnementale selon une température HVAC cible définie respective ;
• une pluralité de capteurs environnementaux (G1, G2, G3, G4, G5, G6), chacun de la pluralité de capteurs environnementaux (G1, G2, G3, G4, G5, G6) étant configuré pour détecter un ou plusieurs paramètres environnementaux ; et

un dispositif de commande (104) configuré pour commander la pluralité de dispositifs HVAC (102(1), 102(2), 102(3), 102(4), 102(5)) et la pluralité de capteurs environnementaux (G1, G2, G3, G4, G5, G6) et pour réaliser le procédé selon l'une quelconque des revendications 1 à 5.

**7.** Système HVAC (100) selon la revendication 6,
au moins un capteur environnemental de la pluralité de capteurs environnementaux étant configuré pour transmettre sans fil les un ou plusieurs paramètres environnementaux détectés au dispositif de commande.

# Fig. 1

# Fig. 2

200

202

204

206

208

210

212

# Fig. 3A

300A

302A

304

306

308    No

Yes

310A

312    No

Yes

210    No    314    Yes

## Fig. 3B

## Fig. 4

# Fig. 5A

# Fig. 5B

Fig. 6

600

102(n)    102(n)    102(n)

Gm    Gm    Gm    Gm    Gm    Gm

Gm    Gm    Gm    Gm

Gm    Gm    Gm

Gm    Gm

102(n)    106(1)    102(n)    102(n)    106(2)    102(n)    106(3)

EP 4 120 046 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060206291 A1
- US 20090199580 A1
- US 20070100479 A1